# EUROPÄISCHE PATENTSCHRIFT

(11) **EP 1 059 165 B1**
(45) Veröffentlichungstag und Bekanntmachung des Hinweises auf die Patenterteilung: **17.09.2003**
(21) Anmeldenummer: 00110877.8
(22) Anmeldetag: 23.05.2000
(51) Int. Cl.: B41F 13/03, B41F 21/00, B65G 21/22

(54) **Kettenführungsbahn für einen Kettentrieb mit Rollenketten**
Chain guide track for a chain drive with roller chains
Guide pour chaîne dans une transmission par chaîne avec des chaînes à rouleaux

(30) Priorität: 01.06.1999 DE 29909552 U
(43) Veröffentlichungstag der Anmeldung: 13.12.2000
(73) Patentinhaber: MAN Roland Druckmaschinen AG, 63075 Offenbach (DE)
(72) Erfinder: Remmel, Klaus, 63579 Freigericht-Neuses (DE)
(74) Vertreter: Stahl, Dietmar

(56) Entgegenhaltungen:
- GB-A- 1 505 681
- US-A- 5 850 907

## Beschreibung

Die Erfindung betrifft eine Kettenführungsbahn für einen Kettentrieb mit Rollenketten, vorzugsweise in einer Druckmaschine, nach dem Oberbegriff des Hauptanspruches.

### [Stand der Technik]

Eine Kettenführungsbahn dieser Art ist gemäß DE 9320257.1 U1 bekannt. Die Kettenführungsbahn besitzt in Transportrichtung der Rollenkette betrachtet in einem definierten Abstand voneinander angeordnete Öffnungen, die die Dicke der Kettenführungsbahn durchdringen. Die vorzugsweise als Schlitze ausgeführten Öffnungen verlaufen in einer weiteren Ausbildung durch den die Kettenführungsbahn stützenden Grundkörper, der als Halterungsteil mit dem benachbarten Maschinengestell verbunden ist. Die Erfindung soll das Ansammeln von Papierstaub bzw. vom Farbresten verhindern, indem der Papier-/Farbstaub kontinuierlich aus dem Bereich des Kettenführungsbahn herausgefördert wird und gleichzeitig die Leichtgängigkeit der Rollenketten zwecks Verschleißreduzierung gewährleistet wird.

Nachteilig ist, das diese Öffnungen insbesondere die Schlitze, den Lauf der Rollenkette beeinflussen. Durch Abrollen der Kettenrollen in Transportrichtung auf der mit Schlitzen/ Öffnungen versehenen Lauffläche treten Stöße auf, die insbesondere bei hohen Transportgeschwindigkeiten die Kettenschwingungen erhöhen. Zur Montage der einzelnen Bauteile untereinander werden keine Hinweise gegeben.

Es ist weiterhin im Druckmaschinenbau bekannt, Kettenführungsbahnen im Ausleger auf der A- und B- Seite anzuordnen, die einzeln zu einer Kettenführungsbahn gefügte Bauteile in Stoß-an-Stoß-Montage fluchtend angeordnet aufweisen. Diese Stöße (Übergänge) der einzelnen Bauteile führen zu unerwünschten Kettenschwingungen, erhöhen die Laufgeräusche und fördern den Verschleiß.

Es sind weiterhin Kettenführungsbahnen bekannt, die bei Draufsicht auf die Lauffläche schräg verlaufende oder im rechten Winkel ausgespart überlappende Übergänge zwischen den einzelnen Bauteilen aufweisen.
In einer weiteren Ausführung gemäß DE 4431492 C2 ist der Übergang zwischen zwei benachbarten Bauteilen durch eine annähernd konvexe Stirnseite und eine annähernd konkave Stirnseite aufgeführt.

Nachteilig ist, das Öffnungen in der Kettenführungsbahn den Lauf der Rollenkette beeinflussen. Durch Abrollen der Kettenrollen in Transportrichtung auf der entsprechenden Lauffläche treten Stöße auf, die insbesondere bei hohen Transportgeschwindigkeiten die Kettenschwingungen erhöhen. Bei diesen Ausbildungen der Übergänge ist der Montageaufwand hoch, um mögliche Schwingungserregungen, insbesondere durch Stöße an den Übergängen zu vermeiden.

### [Aufgabe der Erfindung]

Der Erfindung liegt die Aufgabe zugrunde, eine Kettenführungsbahn der eingangs beschriebenen Art zu schaffen, die die genannten Nachteile vermeidet, die insbesondere an den Übergängen der Kettenführungsbahnen auftretende Schwingungen der Rollenkette spürbar dämpft und darüberhinaus den Montageaufwand reduziert.

Die Aufgabe wird erfindungsgemäß durch die Ausbildungsmerkmale des Hauptanspruches gelöst. Weiterbildungen ergeben sich aus den Unteransprüchen.

Ein erster Vorteil einer erfindungsgemäßen Kettenführungsbahn ist darin begründet, daß im Bereich der durch jeweils zwei Bauteile gebildeten Übergänge Ein- und Ausläufe an der Laufbahn der Bauteilenden, speziell der Kettenschienenenden, angeordnet sind, wobei die Bauteile ausgehend vom Niveau der Laufbahn endseitig unterhalb des Niveaus der Laufbahn gegenläufig geneigt angeordnet sind. Durch die erfindungsgemäße Ausbildung werden die Schwingungen der Rollenkette am Übergang reduziert, da das Niveau der Laufbahn der Kettenführungsbahn im wesentlichen konstant ist bzw. endseitig die Laufbahn geringfügig unterhalb des Niveaus der Laufbahn liegt, wodurch keine Bauteilenden (Kettenschienenden) aus dem Niveau der Lauffläche hervorstehen.

Die erfindungsgemäße Ausbildung der Übergänge gestattet weiterhin eine Reduzierung der dynamischen Belastung des Kettentriebes, der sich auch negativ auf benachbarte Baugruppen auswirken kann. Beispielsweise ist dies der Fall bei Rollenketten im Ausleger einer Bogendruckmaschine bei denen Schwingungen auf an der Rollenkette fixierte Greifersysteme übertragen werden können.

Ein weiterer Vorteil ist darin begründet, daß die einzelnen Bauteile als Kettenschienen formschlüssig lösbar mit einem Seitenständer der Druckmaschine bzw. des Auslegers verbunden und gleichzeitig zentriert sind. Hierbei sind Bauteile auch in einem vorgebenen Bereich am Seitenständer justierbar. Damit ist der Montageaufwand, speziell der Justageaufwand, spürbar reduziert. Vorteilhaft ist ebenso, daß zumindest die Bohrungen, insbesondere die Stiftbohrungen, für die lösbar formschlüssigen Verbindungssysteme in den einzelnen Kettenschienen sowie den entsprechenden Seitenständern bereits bei der mechanischen Fertigung einbringbar sind. Mögliche Positionstoleranzen u.a. der Stiftbohrungen sind vorzugsweise durch den Einsatz von Spiralspannstiften als lösbar formschlüssige Verbindungssysteme ausgleichbar.

Von Vorteil ist ebenso, daß durch die spezielle Gestaltung der Konturen der Ein- und Ausläufe der Kettenschienenenden (Übergang) ein möglicher Versatz, zum Beispiel bedingt durch Fertigungstoleranzen, der Kettenschienen in der Laufbahn ausgleichbar ist. Ein aufwändiges Ausrichten der Kettenschienen bei deren Montage ist damit hinfällig und durch diese Konturen wird auch die Geräuschentwicklung am Übergang spürbar reduziert.

Ein weiterer Vorteil ist damit begründet, daß die erfindungsgemäße Kettenführungbahn für eine einseitige (unten oder oben liegende) Anordnung als auch für eine beidseitige (unten und oben liegende) Anordnung der Laufbahn eines Kettentriebes einsetzbar ist.

Schließlich ist von Vorteil, daß die Kettenführungsbahn an einem Seitenständer direkt mittels Verbindungssystemen lösbar befestigt ist, und durch die Kontur des Seitenständers bereits eine einseitige Kapselung des Kettentriebes zum benachbarten Seitenständer erfolgt.

Vorteilhaft ist weiterhin, daß bei einer oben- und untenliegenden Anordnung von Laufflächen der Kettenführungsbahn die übereinander zugeordneten Übergänge (Einläufe/Ausläufe) zueinander um bevorzugt mindestens eine zweifache Kettenteilung zwischen der obenliegenden und der untenliegenden Lauffläche versetzt angeordnet sind.

In einer Ausbildung ist es vorteilhaft, daß der Kettentrieb lediglich mit einem einzelnen einem Druckwerk oder einer Weiterverarbeitungseinheit benachbart zugeordneten Kettenrad antreibbar ist und ein üblicherweise oberhalb des Stapelbereiches angeordnetes Kettenrad hinfällig ist, so daß im oberen Umlenkbereich die Kettenrollen ausschließlich mittels Kettenführungsbahn geführt werden.

Die Erfindung eignet sich für alle eingangs genannten Ausbildungen von Übergängen in Stoß-an-Stoß-Montage. Die Übergänge weisen in Laufrichtung des Kettentriebes Ausläufe und Einläufe auf, die gegenläufig unterhalb des Niveaus der Laufbahn geneigt sind.

In bevorzugter Ausführung ist jeder Übergang zweier Bauteile, z.B. Kettenführungsschienen, in Draufsicht im rechten Winkel ausgespart mit sich gegenläufig jeweils überlappend angeordnetem Auslauf sowie Einlauf ausgebildet, wobei die Laufbahn des Kettentriebes im Übergang wiederum unterhalb des Niveaus dieser Laufbahn liegt.

Die Erfindung ist nicht auf Ausleger in Druckmaschinen beschränkt. Vielmehr eignet sie sich ebenfalls für Kettentriebe, die als Zwischensysteme zwischen Druckwerken untereinander oder zwischen Druckwerken und Verarbeitungseinheiten, beispielsweise Lackierwerken, Anwendung finden oder für durch die gesamte Druckmaschine endlos verlaufende Kettenführungsbahnen.

### [Beispiele]

Die Erfindung soll an einem Ausführungsbeispiel näher erläutert werden. Dabei zeigen:

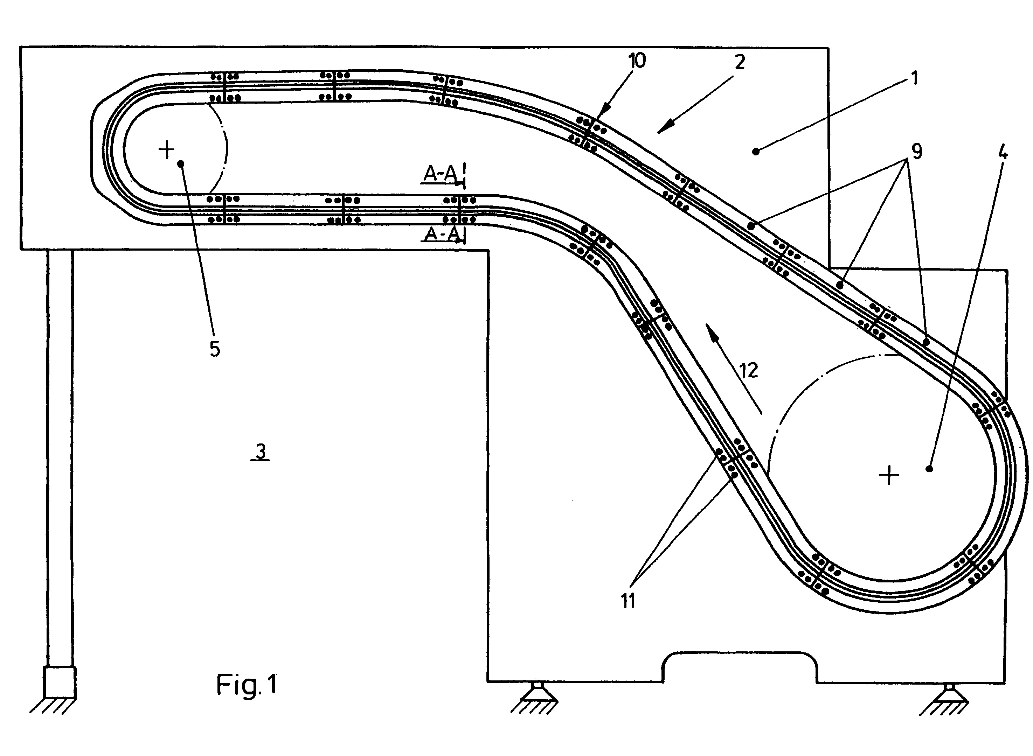

- Fig. 1: eine schematische Seitenansicht einer Kettenführungsbahn in einem Ausleger einer Druckmaschine,
- Fig. 2: einen Schnitt A - A gem. Figur 1,
- Fig. 3: einen Übergang einer Kettenführungsbahn in Draufsicht,

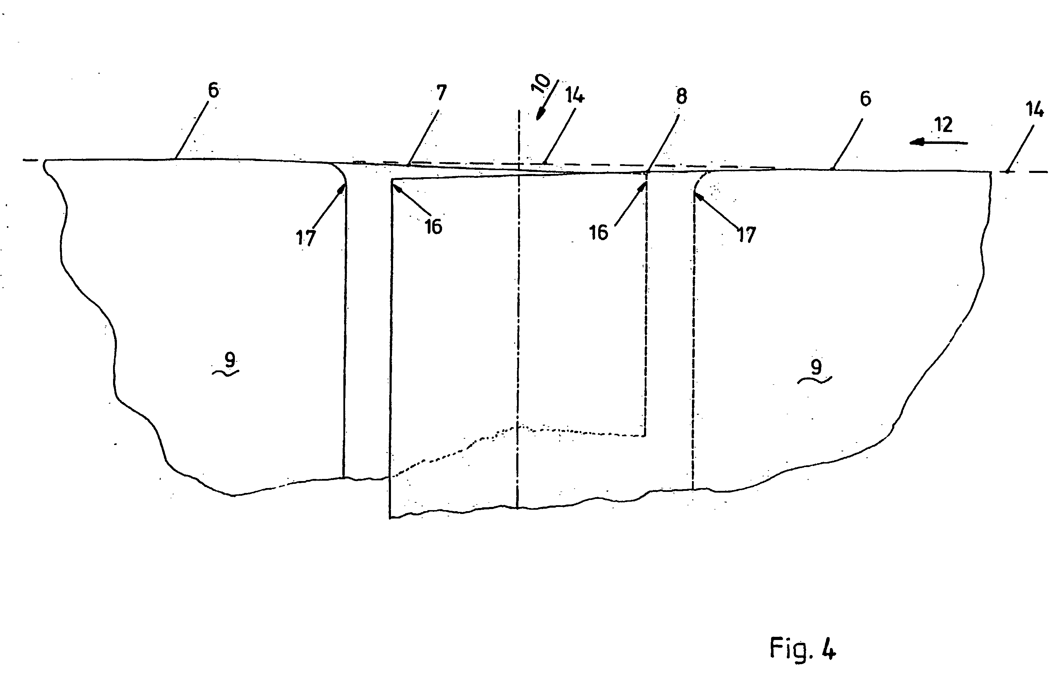

- Fig. 4: eine Seitenansicht eines Überganges (vergrößerter Ausschnitt).

In einer bogenverarbeitenden Rotationsdruckmaschine ist einem Druckwerk oder einer Weiterverarbeitungseinheit ein Ausleger in Bogenlaufrichtung nachgeordnet. Der Ausleger besteht in bekannter Weise aus je einem Seitenständer 1, der jeweils an der A- und B-Seite angeordnet ist. Weiterhin ist eine Kettenradwelle mit je einem Kettenrad 4 (an der A- bzw. B-Seite) angeordnet. Alternativ ist auch der Einsatz einer Auslegertrommel möglich. An dem umlaufenden Kettentrieb sind in bekannter Weise Greifersysteme für den Bogentransport in Abständen angeordnet.

In einer ersten Ausbildung ist oberhalb/eines Stapelbereiches 3 für den Auslegerstapel ein Umlenkkettenrad 5 angeordnet, so daß um die Kettenräder 4 und die Umlenkkettenräder 5 jeweils ein endloser Kettentrieb in Kettenführungsbahnen 2 geführt ist. Alternativ ist lediglich je ein antreibbares Kettenrad 4 mit dem Kettentrieb in Eingriff, wobei der als Zug- und Leertrum verbleibende Kettentrieb mittels der Laufbahnen 6 der Kettenführungsbahn 2 geführt ist.

Je eine Kettenführungsbahn 2 ist mit ihren in Stoß-an-Stoß-Montage angeordneten Bauteilen 9 über Verbindungssysteme 11, vorzugsweise Schrauben und Spiralspannstifte, lösbar am jeweiligen Seitenständer 1 befestigt. Zwischen den oberen und unteren Laufbahnen 6 einer Kettenführungsbahn 2 laufen die Kettenrollen 13 des Kettentriebes. Aus einer Mehrzahl von fluchtenden, vorzugsweise als Kettenschienen ausgebildeten, Bauteilen 9 ist in Stoß-an-Stoß-Montage jede Kettenführungsbahn 2 aus mehreren Übergängen 10 zusammengesetzt. Jedes Bauteil 9 weist jeweils endseitig einen Einlauf 7 und einen Auslauf 8 an der Laufbahn 6 auf, wobei Einlauf 7 und Auslauf 8 unterhalb eines Niveaus 14 der Laufbahn 6 geneigt sind. Ein Übergang 10 ist in Laufrichtung 12 des Kettentriebes durch ein vorgeordnetes Bauteil 9 mit einem Auslauf 8 und einem nachgeordneten Bauteil 9 mit einem Einlauf 7 gebildet. Einlauf 7 und Auslauf 8 sind dabei gegenläufig geneigt.

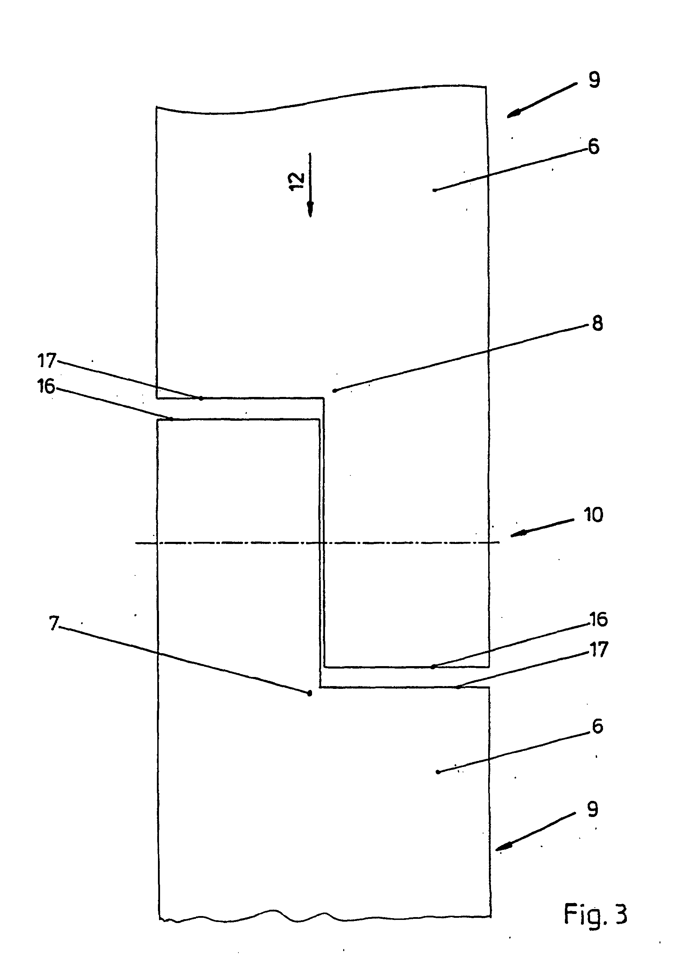

In bevorzugter Ausbildung ist gemäß Fig.3 an einem Übergang 10 zweier benachbarter Bauteile 9, vorzugsweise Kettenschienen, das in Laufrichtung 12 des Kettentriebes vorgeordnete Bauteil 9 - in Draufsicht auf die Lauffläche 6 betrachtet-der Übergang 10 im rechten Winkel ausgespart mit einem (zum nachgeordneten Bauteil 9) überlappenden Auslauf 8 und einem in Laufrichtung 12 nachgeordneten Bauteil 9 mit einem dazu passenden im rechten Winkel ausgespart überlappenden Einlauf 7 ausgeführt. Bei der im rechten Winkel ausgesparten Ausbildung des Überganges 10 weist ein Auslauf 8 einen ersten Endbereich 16 und einen zweiten Endbereich 17 auf. Der gegenläufig angeordnete Einlauf 7 des nachgeordneten Bauteils 9 weist ebenso einen ersten Endbereich 16 und einen zweiten Endbereich 17 auf. Hierbei zeigen die Endbereiche 16 jeweils eine längenmäßig verkürzte Laufbahn 6 (bezogen auf die Gesamtlänge eines Bauteiles 9) im Vergleich zu den Endbereichen 17 auf. Die Stirnseiten von Einlauf 7 und Auslauf 8 sind in geringem Abstand benachbart angeordnet. Im Übergang 10 fällt ein möglicher Stoß an einer Kettenrolle 13 durch die überlappende Anordnung und die gegenläufig geneigte Laufbahn 6 relativ gering aus.

In einer weiteren Ausführung ist in Draufsicht auf die Lauffläche 6 betrachtet der Übergang 10 zweier Bauteile 9 mit schräg verlaufenden Stirnseiten ausgebildet.

In einer weiteren Ausführung ist der Übergang 10 durch eine annähernd konvexe Stirnseite und eine benachbarte, annähernd konkave Stirnseite je eines Bauteiles 9 gebildet. In beiden letzten Ausführungen sind die Ein- und Ausläufe'7,8 analog zur o.g. ersten Ausführung ausgebildet.

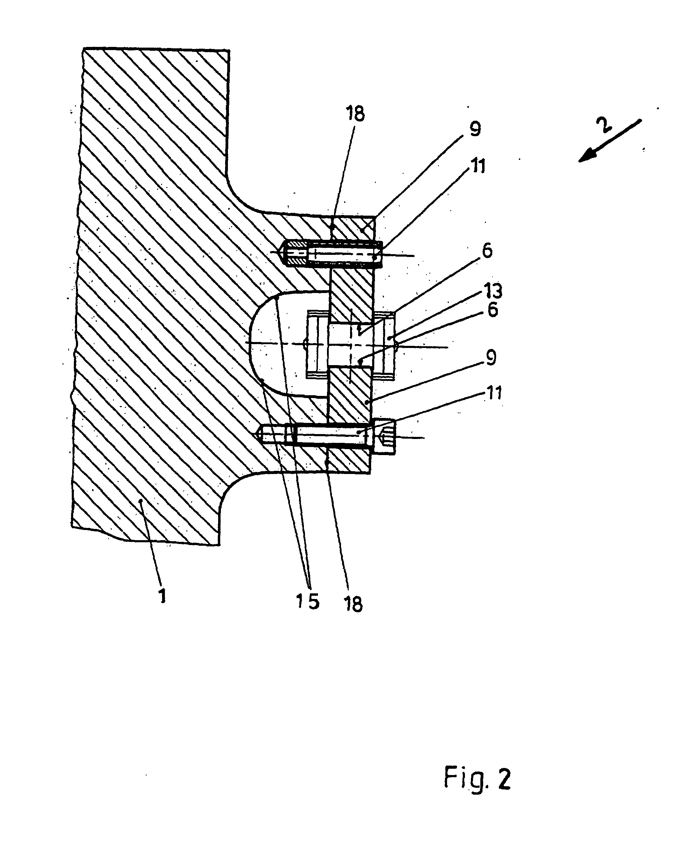

Jeder Seitenständer 1 weist gem. Fig. 2 an der Innenseite Flächen 18 auf, an denen die Bauteile 9 der Kettenführungsbahn 2 mittels Verbindungssysteme 11 unmittelbar lösbar formschlüssig fixiert werden können. Die Seitenständer 1 weisen dazu eine Kontur 15, z.B. eine angegossene Ausformung, auf, so daß bei einer obenliegenden und einer untenliegenden Laufbahn 6 zwei Flächen 18 angeordnet sind. Durch die Kontur 15 wird eine einseitige Kapselung des Kettentriebes an der Innenseite des Seitenständers 1 erzielt. Jedes Bauteil 9 ist endseitig am Auslauf 8 und Einlauf 7 mit je einer Schraube und einem Spiralspannstift als Verbindungssystem 11 an der entsprechenden Fläche 18 am Seitenständer 1 lösbar fixiert.

In bevorzugter Ausbildung sind die benachbarten Übergänge 10 einer obenliegenden Laufbahn 6 und einer unterliegenden Laufbahn 6 einer Kettenführungsbahn 2 um mindestens die zweifache Kettenteilung des Kettentriebes zueinander versetzt angeordnet. Damit wird eine nachteilige Vergrößerung des Abstandes zwischen zwei Laufbahnen 6 vermieden und der Schwingungserregung des Kettentriebes entgegen gewirkt.

Die Wirkungsweise ist wie folgt: Von einer vorgeordneten Baugruppe einer Druckmaschine wird ein Bogen mittels Greifersystemen abgenommen und über den Kettentrieb mit Kettenführungsbahn 2 zu einem Stapelbereich 3 geführt und dort abgelegt. Der Kettentrieb läuft über die Umlenkkettenräder 5 zurück zu den Kettenrädern 4. Die Kettenrollen 13 des Kettentriebes laufen auf einer oben- und'untenliegenden Lauffläche 12 und sind dadurch geführt. Kommt in Laufrichtung 12 betrachtet eine Kettenrolle 13 in den Bereich eines Überganges 10, so läuft durch die Zugbelastung des Kettentriebes diese Kettenrolle 13 (sowie die nachfolgenden Kettenrollen 13) im wesentlichen auf dem Niveau 14 weiter, während im Übergang 10 die Laufbahn 6 am Auslauf 8 (vorgeordnetes Bauteil 9) unter das Niveau 14 verlaufend abfallend angeordnet ist und die Laufbahn 6 am Einlauf 7 (nachgeordnetes Bauteil 9) unterhalb des Niveaus 14 aufsteigend angeordnet ist, um in das Niveau 14 der Laufbahn 6 überzugehen.

### [Bezugszeichenliste]

- 1 -: Seitenständer
- 2 -: Kettenführungsbahn
- 3 -: Stapelbereich
- 4 -: Kettenrad
- 5 -: Umlenkkettenrad
- 6 -: Laufbahn
- 7 -: Einlauf
- 8 -: Auslauf
- 9 -: Bauteil
- 10 -: Übergang
- 11 -: Verbindungssystem
- 12 -: Laufrichtung
- 13 -: Kettenrolle
- 14 -: Niveau
- 15 -: Kontur
- 16 -: erster Endbereich
- 17 -: zweiter Endbereich
- 18 -: Fläche

## Patentansprüche

1. Kettenführungsbahn für einen umlaufenden Kettentrieb mit Rollenketten, vorzugsweise in einer Druckmaschine, mit mindestens einer fluchtenden Laufbahn, welche in Stoß-an-Stoß- Montage von mindestens zwei Bauteilen in Laufrichtung der Kette gebildet ist,
**dadurch gekennzeichnet,**
**daß** in einem durch zwei Bauteile (9) gebildeten Übergang (10) die Laufbahn (6) beider Bauteile (9) endseitig unterhalb eines Niveaus (14) der Laufbahn (6) gegenläufig angeordnet ist.

2. Kettenführungsbahn nach Anspruch 1,
**dadurch gekennzeichnet,**
**daß** jeder Seitenständer (1) Flächen (18) zur unmittelbaren Anordnung der Bauteile (9) am Seitenständer (1) aufweist and daß die Bauteile (9) mittels Verbindungssystemen (11) lösbar formschlüssig fixierbar sind.

3. Kettenführungsbahn nach wenigstens Anspruch 1,
**dadurch gekennzeichnet,**
**daß** in Draufsicht auf die Lauffläche (6) betrachtet der Übergang (10) zweier Bauteile (9) rechtwinklig ausgespart überlappend ausgebildet ist.

4. Kettenführungsbahn nach wenigstens Anspruch 1,
**dadurch gekennzeichnet,**
**daß** in Draufsicht auf die Lauffläche (6) betrachtet der Übergang (10) zweier Bauteile (9) mit schräg verlaufenden Stirnseiten ausgebildet ist.

5. Kettenführungsbahn nach wenigstens Anspruch 1,
**dadurch gekennzeichnet,**
**daß** der Übergang (10) durch eine annähernd konvexe Stirnseite und eine benachbarte, annähernd konkave Stirnseite je eines Bauteiles (9) gebildet ist.

6. Kettenführungsbahn nach wenigstens Anspruch 1,
**dadurch gekennzeichnet,**
**daß** jedes Bauteil (9) jeweils endseitig einen Einlauf (7) und einen Auslauf (8) an der Laufbahn (6) aufweist, welche ausgehend von einem Niveau (14) der Laufbahn (6) unterhalb des Niveaus (14) geneigt sind, und daß ein Übergang (10) in Laufrichtung (12) des Kettentriebes durch ein vorgeordnetes Bauteil (9) mit einem Auslauf (8) und ein nachgeordnetes Bauteil (9) mit einem Einlauf (7) gebildet ist, wobei Auslauf (8) und Einlauf (7) gegenläufig geneigt sind.

7. Kettenführungsbahn nach wenigstens Anspruch 1,
**dadurch gekennzeichnet,**
**daß** die benachbarten Übergänge (10) einer obenliegenden Laufbahn (6) und einer untenliegenden Laufbahn (6) einer Kettenführungsbahn (2) um mindestens die zweifache Kettenteilung des Kettentriebes zueinander versetzt angeordnet sind.

8. Kettenführungsbahn nach wenigstens Anspruch 1,
**dadurch gekennzeichnet,**
**daß** ein Kettentrieb ausschließlich mit einem antreibbaren Kettenrad (4) in Eingriff ist und Zug- und Leertrum durch die Kettenführungsbahn (2) geführt sind.

## Claims

1. Chain guide track for a circulating chain drive with roller chains, preferably in a printing press, having at least one aligned running track, which is formed in an end-to-end assembly from at least two components in the running direction of the chain, **characterized in that** in a transition (10) formed by two components (9), the running track (6) at the ends of the two components (9) is arranged in opposite directions below a level (14) of the running track (6).

2. Chain guide track according to Claim 1, **characterized in that** each side upright (1) has surfaces (18) for the immediate arrangement of the components (9) on the side upright (1), and **in that** the components (9) can be fixed detachably with a form fit by means of connecting systems (11).

3. Chain guide track according to at least Claim 1, **characterized in that**, as seen in plan view of the running surface (6), the transition (10) of two components (9) is designed to be cut out at right angles and to overlap.

4. Chain guide track according to at least Claim 1, **characterized in that**, as seen in plan view of the running surface (6), the transition (10) of two components (9) is formed by ends running obliquely.

5. Chain guide track according to at least Claim 1, **characterized in that** the transition (10) is formed by an approximately convex end and an adjacent, approximately concave end of a component (9) in each case.

6. Chain guide track according to at least Claim 1, **characterized in that** each component (9) in each case has at the end an inlet (7) and an outlet (8) on the running track (6), which, starting from a level (14) of the running track (6), are inclined below the level (14), and **in that** a transition (10) in the running direction (12) of the chain drive is formed by an upstream component (9) with an outlet (8) and a downstream component (9) with an inlet (7), outlet (8) and inlet (7) being inclined in opposite directions.

7. Chain guide track according to at least Claim 1, **characterized in that** adjacent transitions (10) of an upper running track (6) and a lower running track (6) of a chain guide track (2) are arranged to be offset in relation to each other by at least twice the chain pitch of the chain drive.

8. Chain guide track according to at least Claim 1, **characterized in that** a chain drive engages only with a sprocket (4) that can be driven, and the traction and empty runs are guided by the chain guide track (2).

## Revendications

1. Piste de guidage de chaîne pour un entraînement de chaîne en circuit fermé avec chaînes à galet, de préférence dans une machine d'impression, avec au moins une piste de roulement formée de deux composants alignés dans la direction d'avancement de la chaîne et montés bout à bout,
**caractérisée en ce que** dans une transition (10) formée entre deux composants (9), la piste de roulement (6) est disposée, du côté de l'extrémité, en opposition aux deux composants (9), en dessous d'un niveau (14) de la piste de roulement (6).

2. Piste de guidage de chaîne selon la revendication 1, **caractérisée en ce que** chaque support latéral (1) présente des surfaces (18) d'agencement indirect des composants (9) sur le support latéral (1) et **en ce que** les composants (9) peuvent être fixés en correspondance géométrique libérable au moyen de systèmes (11) de liaison.

3. Piste de guidage de chaîne selon au moins la revendication 1, **caractérisée en ce que** dans une vue en plan sur la surface de roulement (6), la transition (10) entre deux composants (9) est configurée à superposition découpée à angle droit.

4. Piste de guidage de chaîne selon au moins la revendication 1, **caractérisée en ce que** dans une vue en plan sur la surface de roulement (6), la transition (10) entre deux composants (9) est configurée avec deux côtés frontaux qui s'étendent obliquement.

5. Piste de guidage de chaîne selon au moins la revendication 1, **caractérisée en ce que** la transition (10) est formée entre un côté sensiblement convexe et un côté sensiblement concave voisins d'un composant (9) respectif.

6. Piste de guidage de chaîne selon au moins la revendication 1, **caractérisée en ce que** chaque composant (9) présente sur chacune de ses extrémités respectives une entrée (7) et une sortie (8) sur la piste de roulement (6) qui, partant d'un niveau (14) de la piste de roulement (6), sont inclinées en dessous du niveau (14), et **en ce qu'**une transition (10) est formée dans la direction de roulement (12) de l'entraînement de chaîne par un composant (9) amont qui présente une sortie (8) et un composant (9) aval qui présente une entrée (7), la sortie (8) et l'entrée (7) étant inclinées l'une par rapport à l'autre.

7. Piste de guidage de chaîne selon au moins la revendication 1, **caractérisée en ce que** les transitions (10) voisines d'une piste de roulement (6) supérieure et d'une piste de roulement (6) inférieure d'une piste (2) de guidage de chaîne sont disposées en décalage mutuel d'au moins l'intervalle double entre les chaînes de l'entraînement de chaîne.

8. Piste de guidage de chaîne selon au moins la revendication 1, **caractérisée en ce qu'**un entraînement de chaîne s'engage exclusivement sur une roue de chaîne (4) motrice, le brin de traction et le brin vide étant guidés par la piste (2) de guidage de chaîne.
